# FASCICULE DE BREVET EUROPEEN

(11) **EP 3 289 436 B1**
(45) Date de publication et mention de la délivrance du brevet: **29.04.2020**
(21) Numéro de dépôt: 16718715.2
(22) Date de dépôt: 27.04.2016
(51) Int. Cl.: G06F 3/02, G07F 19/00, H01Q 1/22, H01Q 1/24, H01Q 9/42, G06F 21/83, G07G 1/00, G06Q 20/34, H01H 13/70, H01H 13/83, G07F 7/10, G06Q 20/20, H01H 13/86, H01Q 1/36

(54) **TERMINAL DE PAIEMENT INTÉGRANT DES MOYENS DE COMMUNICATION SANS FIL**
ZAHLUNGSENDGERÄT MIT DRAHTLOSKOMMUNIKATIONSMITTELN
PAYMENT TERMINAL COMPRISING WIRELESS COMMUNICATION MEANS

(30) Priorité: 27.04.2015 FR 1553778
(43) Date de publication de la demande: 07.03.2018
(73) Titulaire: Ingenico Group, 75015 Paris (FR)
(72) Inventeur: JACQUEMONT, Nicolas, 26120 Montmeyran (FR); BERTHIAUD, Olivier, 07130 Cornas (FR)
(74) Mandataire: Vidon Brevets & Stratégie
(86) Numéro de dépôt international: PCT/EP2016/059449
(87) Numéro de publication internationale: WO 2016/174115

(56) Documents cités:
- WO-A1-00/48142
- JP-B1- 4 647 027
- US-A1- 2005 093 765
- US-A1- 2007 236 396
- US-A1- 2014 327 998

## Description

### 1. Domaine

L'invention se rapporte au domaine des terminaux de paiement. la présente technique se rapporte plus particulièrement au domaine de terminaux de paiement intégrant des moyens de communication sans fil. Plus spécifiquement, la présente technique se rapporte aux terminaux de paiement intégrant des moyens de communication sans fils utilisant un réseau de communication de type GPRS, UMTS ou encore LTE. Un tel réseau de communication repose sur la mise en œuvre, par un opérateur de téléphonie, d'un ensemble de stations de bases définissant un réseau maillé, également appelé réseau cellulaire.

### 2. Art Antérieur

Pour réaliser des transactions sécurisées en ligne, les terminaux de paiement intègrent différents moyens de communications, en particulier des moyens de télécommunications sans fil (GPRS, CDMA, UMTS, LTE, Wi-Fi, Bluetooth® etc.). Les terminaux de paiement deviennent également de plus en plus communiquant, que ce soit pour réaliser des transactions sécurisées en ligne mais également pour tout type de services qu'un tel terminal peut proposer. C'est la raison pour laquelle les performances de communication sans fil des terminaux de paiement sont un facteur de plus en plus différentiant entre les différents fournisseurs de terminaux.

Il est souvent difficile d'intégrer les fonctions de radio-transmission tout en conciliant les contraintes liées aux différentes fonctions de ces terminaux de paiement. Les contraintes en terme d'architecture mécanique, de sécurité et d'électronique mais également de coût ne favorisent pas des performances rayonnées maximales du lien radio. C'est ce qu'on observe usuellement sur les appareils de taille réduite dont l'antenne est située de manière relativement proche du système électronique du terminal de paiement. C'est plus particulièrement le cas des terminaux « portables ». Les terminaux portables sont des terminaux destinés à être utilisés en situation de mobilité. Un cas typique d'utilisation d'un terminal de paiement portable peut par exemple être le taxi. Le chauffeur de taxi peut avoir à sa disposition un terminal de paiement portable, dont il se sert pour encaisser le règlement des clients souhaitant payer par carte bancaire. Une autre situation dans laquelle on rencontre ce type de terminaux est celle des professionnels de santé (médecins, infirmiers) qui effectuent des visites chez leurs patients et qui utilise un terminal de paiement tout autant pour recevoir des règlements de leurs patients que pour effectuer par exemple des télétransmission de données de prescription ou de données médicales à des centres administratifs donnés. Dans ce deuxième cas, par exemple, le terminal de paiement embarque un lecteur de carte professionnelle permettant au professionnel de santé d'y introduire sa carte professionnelle. En fonction des pays et des législations, d'autres cas de figures et usages des terminaux portables sont évidemment possibles. Quels qu'ils soient, ces usages nécessitent cependant un accès performant aux réseaux cellulaires des opérateurs de télécommunication afin de permettre une bonne exécution des transactions.

Il est donc souhaitable de déporter l'antenne de radio communication dans une zone « isolée », là où son rayonnement n'est pas perturbé par d'autres dispositifs comme une caméra, un lecteur de code à barre ou une autre antenne de communication.

Il résulte de ces usages, que pour concilier au mieux les différentes contraintes et permettre un rayonnement de(s) antenne(s) suffisant ainsi qu'une isolation suffisante face aux diverses sources de bruits, les fabricants de terminaux de paiement ont souvent recours à une technique de déport d'antenne dans une zone plus ou moins normalisée. Ainsi, la plupart des fabricants de terminaux de paiement insèrent l'antenne de communication cellulaire (GPRS, UMTS, LTE), au niveau soit du bloc imprimante (bloc comprenant le rouleau de papier servant à l'impression des reçus), soit latéralement, au niveau de l'un des côtés du terminal de paiement. Le positionnement de l'antenne dans cette zone a une origine principalement historique : lorsque le nombre de fonctionnalités et le nombre de normes de communication des terminaux de paiement était réduit, ce positionnement semblait naturel car l'antenne était positionnée en partie haute du terminal. Ce positionnement ressemblait au positionnement de l'antenne que l'on trouvait à l'époque au sein des téléphones portables. Ce positionnement a perduré jusqu'à aujourd'hui.

Cependant, ces emplacements sont sous optimaux. Par exemple, pour ce qui est de la localisation au niveau du bloc imprimante, l'antenne de communication cellulaire reçoit des interférences : les interférences reçues proviennent de l'antenne de communication sans contact (contactless). En effet les antennes de communication sans contact sont souvent situées à proximité de l'écran du terminal de paiement et donc à proximité également du bloc imprimante. Elles génèrent donc du bruit.

Les documents WO00/48142A1 et JP4647027B1 divulguent des terminaux de paiement intégrant une antenne. Le document US2014/0327998A1 décrit un élément de décharge électrostatique pour un terminal de paiement.

### 3. Résumé

La présente divulgation permet de résoudre les problèmes posés par ces terminaux de l'art antérieur. En effet, elle se rapporte à un terminal de paiement selon la revendication indépendante 1. Ce terminal comprenant un lecteur de carte à puce et une antenne radioélectrique, ladite antenne radioélectrique étant positionnée à proximité d'un orifice d'insertion du lecteur de carte à puce, de sorte que ladite antenne absorbe une partie de décharge électrostatique d'une carte à puce lorsque ladite carte est insérée dans ledit lecteur.

Ainsi, l'antenne bénéficie d'un meilleur rayonnement électromagnétique et participe à l'absorption des décharges électrostatiques survenant lors de l'insertion de carte à puce dans le lecteur de carte à puce du terminal de paiement. L'antenne rempli alors deux fonctions et participe au caractère compact du terminal de paiement dans laquelle elle est Les revendications dépendantes concernent des modes de réalisation préférés.

Selon une caractéristique particulière, l'antenne radioélectrique est constituée au moins en partie d'une tôle métallique.

Ainsi, l'antenne est économiquement avantageuse à fabriquer

Selon un mode de réalisation particulier, l'antenne radioélectrique comprend une surface supérieure, un rebord et au moins un patin de connexion, ledit patin de connexion comprenant une première partie, parallèle à ladite surface supérieure et perpendiculaire audit rebord.

Selon un mode de réalisation particulier, l'ensemble formé par ladite surface supérieure, ledit rebord et ladite première partie dudit au moins un patin de connexion est conformé pour s'emboiter sur un côté d'un guide lumière présent dans le terminal de paiement.

Ainsi, l'antenne peut aisément être montée dans le terminal de paiement. Ce montage ne requiert pas de manipulation complexe.

Selon un mode de réalisation particulier, caractérisé en ce que ledit au moins un patin de connexion comprend en outre au moins une troisième partie, dite de connexion, conformée pour entrer en contact avec une zone de connexion d'un circuit imprimé du terminal de paiement.

Ainsi, il n'est pas nécessaire de réaliser une soudure de l'antenne.

### 4. figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :

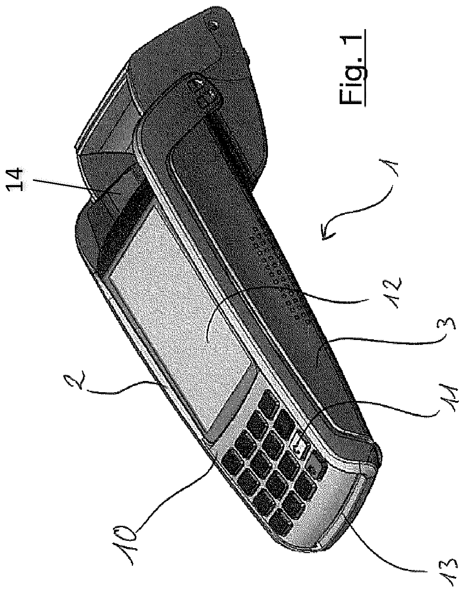

- la figure 1 est une vue en perspective, de dessus, d'un terminal de paiement électronique de l'art antérieur ;
- la figure 1 est une vue schématique d'un terminal de paiement (le boîtier et le clavier ne sont pas illustrés) selon un mode de réalisation de l'invention;
- la figure 3 illustre la forme de l'antenne selon un mode de réalisation de l'invention ;
- la figure 4 illustre le montage de l'antenne sur le guide lumière du terminal de paiement;
- la figure 5 montre un diagramme d'émission de l'antenne selon l'invention ;
- la figure 6 montre un terminal de paiement selon l'invention lors son utilisation.

### 5. Description

Comme explicité précédemment, il est nécessaire de conférer de bonnes performances de radio transmission au terminal de paiement, particulièrement dans le cas des radios transmissions effectuées dans le cadre des transmissions de données qui utilisent les services d'un réseau maillé d'opérateur basé par exemple sur des technologies 2G, 3G ou 4G. Pour ce faire, les inventeurs ont eu l'idée de déplacer l'antenne de radiocommunication 2G/3G/4G à proximité du lecteur de carte à puce du terminal de paiement. À la différence de l'approche standard décrite précédemment, consistant à déplacer l'antenne au niveau du rouleau de papier du terminal, les inventeurs ont fait le choix inverse : l'antenne est située non pas dans la partie haute du terminal (i.e. partie comprenant l'écran, l'imprimante, le rouleau de papier, etc.), mais dans la partie basse de celui-ci (partie comprenant par exemple le lecteur de carte à puce, le clavier, etc.).

La figure 1 représente un terminal de paiement électronique 1 de l'art antérieur qui comprend notamment un clavier 11, un écran 12 et un lecteur de carte à puce 13 permettant l'utilisation d'une carte de paiement. Ces différents composants, ainsi que des composants électroniquement visibles, sont regroupés dans un boitier 10 qui est lui-même composé d'une demi-coque supérieure 2 assemblées sur une demi-coque inférieure 3. L'antenne de radio communication 2G/3G est généralement située au niveau du rouleau de l'imprimante 14.

Selon la technique proposée, en revanche, l'antenne est positionnée au niveau du lecteur de carte à puce 13. Un tel positionnement est avantageux à plus d'un titre : d'une part, cette position est moins perturbée que ne le sont les autres positions ; d'autre part un tel positionnement permet de favoriser la décharge électrostatique de la carte à puce lorsqu'elle est insérée dans le lecteur de carte à puce. En effet, l'antenne de radio communication qui est proche de la carte à puce agit alors comme un absorbeur d'électricité statique. Or, il est important que la carte à puce soit déchargée avant que la puce de la carte à puce entre en contact avec le connecteur situé à l'intérieur du connecteur de la carte à puce. Usuellement, la manière dont ce problème de décharge électrostatique est résolu par les fabricants consiste à prévoir, au niveau du lecteur de carte à puce, des moyens de décharge spécifiques. Grace à la technique proposée, l'antenne joue également ce rôle de décharge et permet donc de limiter, voire de totalement supprimer (dans certains cas), les autres dispositifs de décharge électrostatique.

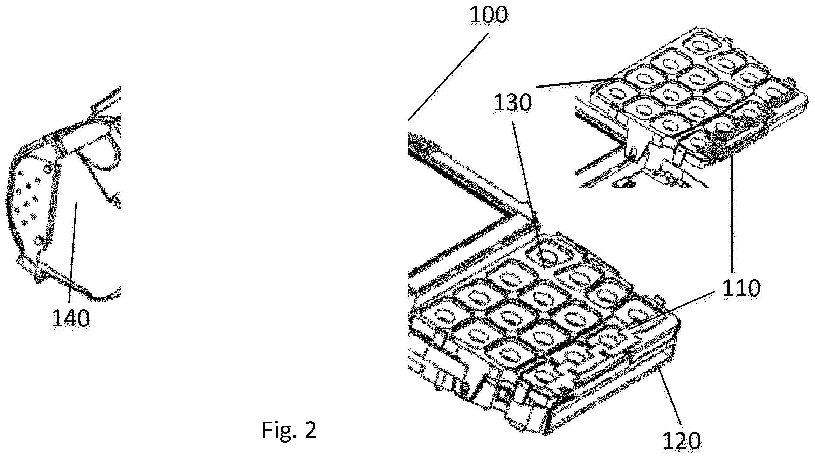

La figure 2 est une vue schématique d'un terminal de paiement selon un mode de réalisation de l'invention. On note que l'a structure interne du terminal, non pertinente pour la présente, n'est pas divulguée dans les figures. Le boîtier et le clavier ne sont pas illustrés et les composants internes sont masqués. Ce terminal de paiement 100 intègre des moyens de télécommunications sans fils (2G, 3G, 4G, Wifi, Bluetooth® etc.) et comprend en particulier un lecteur de carte bancaire 120, un guide lumière 130 et une antenne 110. L'antenne 110 se situe au niveau du lecteur de carte bancaire 120. L'intérêt est que cette position est moins parasitée que la position à la quelle cette antenne se trouve habituellement. En effet, la position habituelle, au milieu du terminal de paiement ou dans sa partie haute, lieu où se situent généralement l'imprimante et son logement de rouleau 140, est de plus en plus occupée. Par ailleurs, d'autres positions (sur les flancs du terminal) se situent à proximité d'éléments perturbateur ou sensible comme le lecteur code barre, la caméra, etc. Pour faciliter le montage, cette antenne 110 s'emboite sur le guide lumière 130 préalablement au montage de celui-ci, comme illustré dans le dessin en haut à droite de la figure 2. Le guide-lumière est une pièce transparente dont la fonction principale est de guider la lumière vers un pavé de touche, lui-même réalisé dans une matière plus ou moins transparente. Dans ce mode de réalisation, le guide lumière se présente sous la forme d'un parallélépipède rectangle dont la longueur est une fonction de la longueur d'un premier nombre prédéterminé de touches dudit clavier et dont la largeur est une fonction de la largeur d'un deuxième nombre prédéterminé de touches, et dont l'épaisseur est une fonction de l'épaisseur du terminal dans lequel le guide lumière prend place.

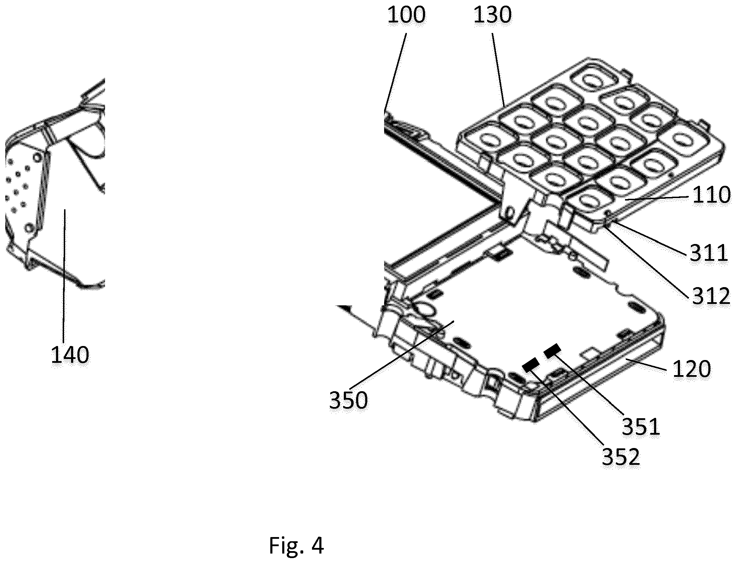

À titre indicatif, dans un mode de réalisation, le guide lumière a les dimensions suivantes : 43 millimètres en largeur, 60 millimètres en longueur (ou 63 dans une dimension haute) et 3,5 millimètres en épaisseur. Le guide lumière comprend deux languettes latérales, s'étendant sensiblement verticalement, ces languettes comprenant chacune un trou oblong s'étendant sensiblement verticalement et qui permettent un assemblage simple et efficace du guide lumière sur la structure interne du terminal de paiement. Le guide lumière est par la suite pressé sur la carte mère 350 (figure 4) du terminal de paiement lors de l'assemblage final. Il s'agit d'un guide lumière du type de celui décrit dans la demande de brevet FR1553778 incorporée ici par référence.

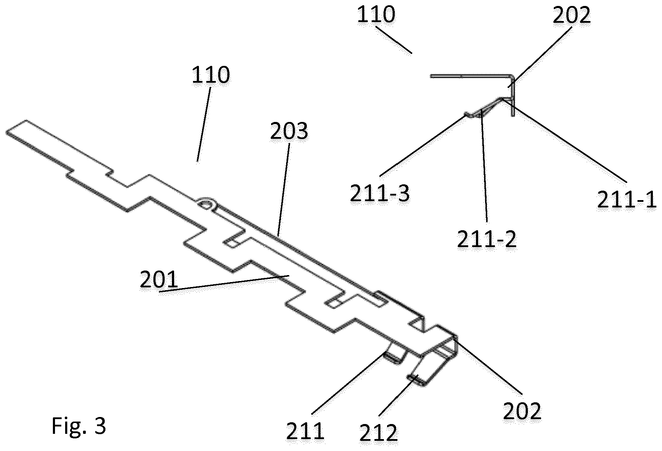

Comme illustré dans la figure 3, l'antenne 110 se présente sous la forme d'une tôle métallique, comprenant deux patins 211, 212 de connexion dans sa partie inférieure. Son dessin est fait en sorte que l'ensemble antenne plus support s'accordent aux fréquences souhaitées comme les bandes 850/900/1800/1900/2100 pour 2G, 3G, LTE ou 2,4GHz pour le Bluetooth® ou Wi-Fi. Ce dessin tient compte de l'environnement proche que sont le lecteur de carte bancaire ainsi que le clavier. L'antenne « épouse » parfaitement ces éléments afin d'optimiser au plus la compacité du produit. À titre indicatif, dans un mode de réalisation, l'antenne a les dimensions suivantes : 55 millimètres en longueur, 7 millimètres en largeur et 4 millimètres en épaisseur. Dans ce mode de réalisation, l'antenne est légèrement plus épaisse que le guide lumière sur lequel elle s'emboite. Cette antenne pourrait dans une autre réalisation être munie d'un brin additionnel (pour une autre fréquence supplémentaire, comme LTE par exemple) et ainsi croitre en « enveloppant » la partie « extrême » du lecteur de carte à mémoire et ainsi « s'épaissir » de 6mm. L'épaisseur serait alors portée à 10mm (l'épaisseur du lecteur de carte à mémoire étant de 4 millimètres). Ce deuxième exemple accroit la capacité de décharge électrostatique de l'antenne. Ainsi, l'antenne se situe à proximité de l'orifice d'insertion de la carte à puce dans le lecteur de carte à puce. Dans le cadre de la présente, on peut estimer que le caractère de proximité de l'antenne se définit par une distance de l'antenne par rapport à l'orifice d'insertion de la carte à puce inférieure à 1 centimètre. Dans le mode de réalisation présenté, cette distance est située entre 2 et 4 millimètres, en fonction de l'épaisseur du lecteur de carte à mémoire.

Comme indiqué précédemment, l'antenne s'emboite sur le guide lumière pour faciliter le montage. Ainsi, par exemple, on évite une étape complexe de soudure d'une antenne dans le terminal. La forme de l'antenne, qui épouse la forme du guide-lumière, est intéressante pour permettre un montage facile. Par ailleurs, les deux patins 211, 212 de connexion ne nécessitent pas d'être soudé : il suffit qu'il entre en contact avec deux points de connexion correspondant de la carte mère. Les patins ont globalement une première partie (211-1), parallèle à la surface supérieure de l'antenne (201) et perpendiculaire au rebord (202) de l'antenne. L'ensemble constitué de la surface supérieure, du rebord et de la première partie des patins est dimensionné pour s'emboiter sur le guide lumière, à proximité de l'orifice d'insertion de la carte à puce. Le patin comprend également une deuxième partie (211-2), plongeante, dont la longueur est adaptée à la position du point de connexion correspondant sur la carte mère du terminal. Le patin comprend également une troisième partie (211-3), dite de connexion, qui est effectivement en contact avec le point de connexion. L'antenne comprend également, à proximité du rebord (202) qui comprend les patins de connexion, un rebord d'émission 203, qui est situé à proximité de l'orifice d'insertion du lecteur de carte à mémoire. Ce rebord est plu visible, en couleur grise, sur la figure 2.

La figure 4 illustre le terminal de paiement 100 sur lequel le guide lumière 130 et l'antenne 310 ne sont pas encore montés. Le terminal de paiement 100 comprend une carte mère 140, un lecteur de carte bancaire 120 et un logement de rouleau 140. Lorsque le guide lumière 130 est pressé sur la carte mère 350, ces deux patins de connexion 311, 312 entrent en contact avec deux points de connexions 351, 352 correspondants sur la carte mère 350. Ainsi, les patins de connexion 311, 312 remplissent une double fonction : la fixation de l'antenne et la connexion de l'antenne avec le circuit RF sur la carte mère. Ainsi, dans ce mode de réalisation, il n'y a plus d'élément « ajouté » (comme un câble coaxial ou un connecteur) entre l'antenne proprement dite et le module radio. Il en résulte une simplification de montage du terminal, d'une part et une baisse du cout de production du terminal d'autre part. En effet, une antenne relativement couteuse est ainsi remplacée par une tôle pliée de moindre cout.

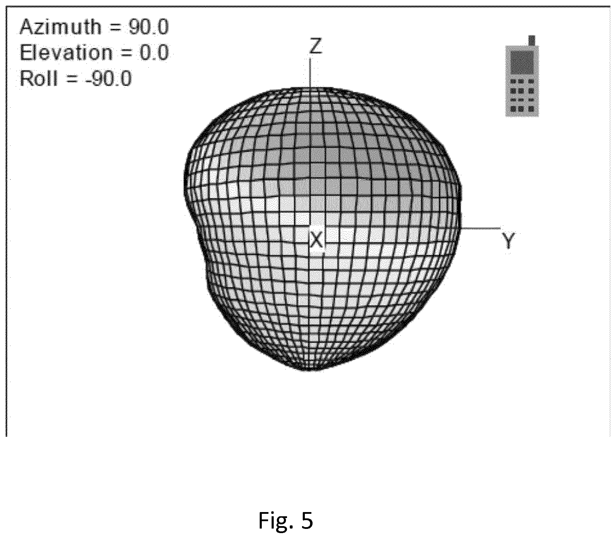

La forme de la tôle de l'antenne et son positionnement sont adaptés pour produire un diagramme d'émission « optimisé » pour avoir les performances les meilleures. Un des diagrammes « type » d'un mode de réalisation de l'antenne est fourni dans la figure 5.

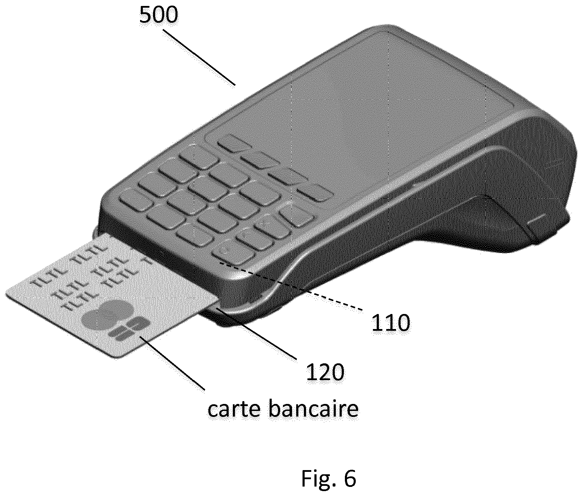

La figure 6 montre un terminal de paiement 500 selon l'invention lors son utilisation. Une carte bancaire est insérée dans le lecteur de carte 120 du terminal. L'antenne 110 (invisible dans la figure 6) se situe au niveau du lecteur de la carte bancaire 120 et au-dessus de la carte bancaire. Le positionnement du l'antenne la permet d'absorber une partie de la décharge électrique lorsque la carte est insérée dans le lecteur. L'élément le plus proche sur le chemin de la carte lors de son insertion étant ladite antenne, la décharge électrique s'écoulera de manière privilégiée via l'antenne et son point de masse permettant ainsi de diminuer le risque d'endommager le terminal de paiement.

## Revendications

1. Terminal de paiement (100) comprenant un lecteur de carte à puce (120) et une antenne radioélectrique (110), **caractérisée en ce que** ladite antenne radioélectrique (110) est positionnée à proximité d'un orifice d'insertion du lecteur de carte à puce, de sorte que ladite antenne absorbe une partie de décharge électrostatique d'une carte à puce lorsque ladite carte est insérée dans ledit lecteur.

2. Terminal de paiement (100) selon la revendication 1, **caractérisée en ce que** ladite antenne est constituée au moins en partie d'une tôle métallique.

3. Terminal de paiement (100) selon la revendication 1, **caractérisée en ce que** ladite antenne radioélectrique comprend une surface supérieure (201), un rebord (202) et au moins un patin de connexion (211, 212), ledit patin de connexion comprenant une première partie (211-1), parallèle à ladite surface supérieure (201) et perpendiculaire audit rebord (202).

4. Terminal de paiement (100) selon la revendication 3, **caractérisé en ce que** l'ensemble formé par ladite surface supérieure (201), ledit rebord (202) et ladite première partie (211-1) dudit au moins un patin de connexion (211, 212) est conformé pour s'emboiter sur un côté d'un guide lumière (130) présent dans ledit terminal de paiement.

5. Terminal de paiement (100) selon la revendication 3, **caractérisé en ce que** ledit au moins un patin de connexion (211, 212) comprend en outre au moins une troisième partie, dite de connexion, conformée pour entrer en contact avec une zone de connexion d'un circuit imprimé dudit terminal de paiement.

6. Terminal de paiement (100) selon la revendication 1, **caractérisée en ce que** ladite antenne radioélectrique comprend un rebord d'émission (203) situé à proximité de l'orifice d'insertion du lecteur de carte à mémoire.

7. Terminal de paiement (100) selon la revendication 1, **caractérisée en ce que** ladite antenne radioélectrique est emboitée sur un guide lumière (130) dudit terminal de paiement.

8. Terminal de paiement (100) selon la revendication 7, **caractérisé en ce que** le guide lumière se présente sous la forme d'un parallélépipède rectangle.

## Patentansprüche

1. Zahlungsendgerät (100), umfassend einen Chipkartenleser (120) und eine Funkantenne (110), **dadurch gekennzeichnet, dass** die Funkantenne (110) in der Nähe von einer Einstecköffnung des Chipkartenlesers derart angeordnet ist, dass die Antenne einen Teil der elektrostatischen Entladung einer Chipkarte absorbiert, wenn die Karte in den Leser eingesteckt wird.

2. Zahlungsendgerät (100) nach Anspruch 1, **dadurch gekennzeichnet, dass** die Antenne mindestens teilweise aus einem Metallblech gebildet ist.

3. Zahlungsendgerät (100) nach Anspruch 1, **dadurch gekennzeichnet, dass** die Funkantenne eine obere Oberfläche (201), einen Rand (202) und mindestens eine Anschlusskufe (211, 212) aufweist, wobei die Anschlusskufe einen ersten Teil (211-1) parallel zur oberen Oberfläche (201) und senkrecht zum Rand (202) aufweist.

4. Zahlungsendgerät (100) nach Anspruch 3, **dadurch gekennzeichnet, dass** die Anordnung, die durch die obere Oberfläche (201), den Rand (202) und den ersten Teil (211-1) der mindestens einen Anschlusskufe (211, 212) gebildet ist, ausgebildet ist, um auf eine Seite eines Lichtleiters (130), der in dem Zahlungsendgerät vorhanden ist, gesteckt zu werden.

5. Zahlungsendgerät (100) nach Anspruch 3, **dadurch gekennzeichnet, dass** die mindestens eine Anschlusskufe (211, 212) ferner mindestens einen dritten Teil, der Anschlussteil genannt wird, aufweist, der ausgebildet ist, um mit einem Anschlussbereich einer Leiterplatte des Zahlungsendgeräts in Kontakt zu kommen.

6. Zahlungsendgerät (100) nach Anspruch 1, **dadurch gekennzeichnet, dass** die Funkantenne einen Senderand (203) aufweist, der in der Nähe der Einstecköffnung des Speicherkartenlesers angeordnet ist.

7. Zahlungsendgerät (100) nach Anspruch 1, **dadurch gekennzeichnet, dass** die Funkantenne auf einen Lichtleiter (130) des Zahlungsendgeräts gesteckt ist.

8. Zahlungsendgerät (100) nach Anspruch 7, **dadurch gekennzeichnet, dass** der Lichtleiter die Form eines rechteckigen Parallelepipeds aufweist.

## Claims

1. Payment terminal (100) comprising a smart-card reader (120) and a radio-electric antenna (110) **characterized in that** said radio-electric antenna (110) is positioned in proximity to an insertion hole of the smart-card reader, so that said antenna absorbs a part of the electrostatic discharge of a smart card when said card is inserted into said reader.

2. Payment terminal (100) according to claim 1, **characterized in that** said radio-electric antenna is constituted at least partly by a metal plate.

3. Payment terminal (100) according to claim 1, **characterized in that** said radio-electric antenna comprises an upper surface (201), a rim (202) at least one connection pad (211, 212), said connection pad comprising a first part (211-1), parallel to said upper surface (201) and perpendicular to said rim (202).

4. Payment terminal (100) according to claim 3, **characterized in that** at the assembly formed by said upper surface (201), , said rim (202) and said first part (211-1) of said at least one connection pad (211, 212) is shaped to fit into one side of a light guide present in the payment terminal.

5. Payment terminal (100) according to claim 3, **characterized in that** said at least one connection pad (211, 212) furthermore comprises at least one third part, called a connection part, shaped to come into contact with a connection zone of a printed circuit of the payment terminal.

6. Payment terminal (100) according to claim 1, **characterized in that** said radio-electric antenna comprise an emitting rim (203) located at proximity of said insertion hole of the smart-card reader.

7. Payment terminal (100) according to claim 1, **characterized in that** said radio-electric antenna is fitted together with a light guide (130) of said payment terminal.

8. Payment terminal (100) according to claim 7, **characterized in that** said light guide takes the form of a rectangular parallelepiped.
